# EUROPÄISCHE PATENTSCHRIFT

(11) **EP 4 469 312 B1**
(45) Veröffentlichungstag und Bekanntmachung des Hinweises auf die Patenterteilung: **04.03.2026**
(21) Anmeldenummer: 23702078.9
(22) Anmeldetag: 24.01.2023
(51) Int. Cl.: B60R 22/48, B60R 21/015

(54) **SICHERHEITSGURT UND DETEKTIONSSYSTEM**
SEAT BELT AND DETECTION SYSTEM
CEINTURE DE SÉCURITÉ ET SYSTÈME DE DÉTECTION

(30) Priorität: 25.01.2022 DE 102022101717
(43) Veröffentlichungstag der Anmeldung: 04.12.2024
(73) Patentinhaber: Autoliv Development AB, 447 83 Vårgårda (SE)
(72) Erfinder: COSTEA, Mihaela, 500053 Brasov (RO); WELZ, Willi, 5464 Veghel (NL); MUELLER, Kai-Stephan, 25524 Oelixdorf (DE); TIRON, Crina, 500053 Brasov (RO); IONITA, Ioan, 505302 Brasov (RO)
(74) Vertreter: Müller Verweyen
(86) Internationale Anmeldenummer: PCT/EP2023/051603
(87) Internationale Veröffentlichungsnummer: WO 2023/144106

(56) Entgegenhaltungen:
- WO-A1-2020/104352
- DE-A1- 102015 120 811
- DE-A1- 102018 122 481
- DE-A1- 102021 206 235
- DE-B3- 102006 040 244
- JP-A- 2017 056 877
- US-A1- 2021 146 878

## Beschreibung

Die vorliegende Erfindung betrifft einen Sicherheitsgurt nach dem Oberbegriff des Anspruchs 1 sowie ein Detektionssystem für das Detektieren des Benutzungszustands eines Sicherheitsgurts nach dem Oberbegriff des Anspruch 10.

In Kraftfahrzeugen werden regelmäßig Gurtwarnsysteme eingesetzt, welche bei Belegung eines Fahrzeugsitzes durch einen Insassen den Anschnallzustand überprüfen. Derartige Gurtwarnsysteme detektieren beispielsweise den Einsteckzustand der Gurtzunge. Hierbei kann es vorkommen, dass der Insasse den Sicherheitsgurt überhaupt nicht trägt, sondern das Gurtwarnsystem den Einsteckzustand mit einer anderen Einsteckzunge täuscht. Weiterhin ist es möglich, dass der Insasse auf dem eingesteckten Sicherheitsgurt sitzt oder der Sicherheitsgurt zwischen dem Rücken und der Rückenlehne verläuft. Darüber hinaus sind beispielsweise Zustände möglich, bei denen der Brustgurt unter dem Arm verläuft. Für eine erhöhte Insassensicherheit und ggf. auch für die Steuerung von aktiven Sicherheitsmechanismen, wie Airbags und Gurtstraffern, sind optische Detektionssysteme im Fahrzeug bekannt, welche für das Erkennen des Benutzungszustands des Sicherheitsgurts, beispielsweise ordnungsgemäß angelegt, nicht oder nicht ordnungsgemäß angelegt, vorgesehen sind. Die entsprechende Detektion erfolgt häufig im nicht sichtbaren, infraroten Spektralbereich des Lichts, so dass beispielsweise eine entsprechende Detektion auch nachts ohne Blendung des Insassens möglich ist. Die WO2020/104352A1 offenbart ein Sicherheitsgurt nach dem Oberbegriff von Anspruch 1.

Die Aufgabe der vorliegenden Erfindung ist es, einen Sicherheitsgurt anzugeben, welcher für eine optische Erfassung des Benutzungszustands besonders geeignet ist, sowie ein entsprechendes Detektionssystem mit einem solchen Sicherheitsgurt.

Die Aufgabe wird durch die Merkmale der unabhängigen Ansprüche gelöst. Weitere bevorzugte Weiterentwicklungen sind den Unteransprüchen, den Figuren und der zugehörigen Beschreibung zu entnehmen.

Zur Lösung der Aufgabe wird ein Sicherheitsgurt für ein Kraftfahrzeug vorgeschlagen, wobei der Sicherheitsgurt Markierungen aufweist, welche im infraroten Spektralbereich optisch detektierbar sind. Die Markierung umfasst Kantenmarkierungen beider Kanten des Sicherheitsgurtes, und die Markierung weist eine zur Längsachse des Sicherheitsgurtes asymmetrische Markierung auf.

Durch die entsprechende Verteilung der Markierung auf dem Sicherheitsgurt ist der Sicherheitsgurt besonders gut für eine optische Detektion geeignet. Die Markierung des Sicherheitsgurts, welche auch als Muster bezeichnet werden kann, kann bei einer Detektion durch automatische Systeme beispielsweise besonders leicht von dem Hintergrund, in der Regel vom Insassen bzw. der Kleidung, unterschieden werden. Die Kantenmarkierung dient insbesondere zur Abgrenzung des Sicherheitsgurts von der Kleidung des Insassen. Weiterhin sind die Kantenmarkierungen der Markierung auf dem Sicherheitsgurt maximal voneinander entfernt und erreichen daher eine maximierte Auflösung und optimierte Erkennbarkeit der Lage des Sicherheitsgurtes. Die zur Längsachse asymmetrische Markierung des Sicherheitsgurts eignet sich besonders gut für eine automatische Detektion durch eine im infraroten Spektrum, vorzugsweise im nah-infraroten Spektrum, sensitive Kamera und eine entsprechende Datenverarbeitungsvorrichtung. Es wird hierdurch unter anderem die Unterscheidbarkeit gegenüber der Kleidung eines Insassen, beispielsweise einem gestreiften T-Shirt, verbessert.

Die Markierung kann im infraroten Spektrum heller oder dunkler als die weiteren unmarkierten Bereiche des Sicherheitsgurts sein. Vorzugsweise ist mit dem menschlichen Auge im sichtbaren Spektrum kein Unterschied zwischen der Markierung und den weiteren unmarkierten Bereichen des Sicherheitsgurts erkennbar.

Die entsprechende Markierung ist vorzugsweise beidseitig auf dem Sicherheitsgurt vorhanden, so dass eine Verdrehung des Sicherheitsgurts die Funktionalität der Markierung nicht beeinträchtigt.

Es wird ferner vorgeschlagen, dass die Kantenmarkierung beider Kanten durch Längsstreifen gebildet ist. Längsstreifen verlaufen parallel zur Längsachse des Sicherheitsgurts und eignen sich insbesondere zur Bildung der Kantenmarkierung. Ein Längsstreifen ist vorzugsweise ununterbrochen. In weiteren Ausführungsformen sind jedoch auch gestrichelte, punktierte oder strichpunktierte Längsstreifen möglich.

Gemäß einer Weiterentwicklung wird vorgeschlagen, dass die beiden Längsstreifen der Kantenmarkierung gleich sind. Die beiden Kantenmarkierung weisen daher vorzugsweise die gleiche Breite und das gleiche Reflexions- und Absorptionsverhalten auf.

Weiterhin wird vorgeschlagen, dass die Markierung wenigstens drei Längsstreifen aufweist. Dies ermöglicht die Bildung eines Musters, welches in einfacher Weise mittels einer im infraroten Spektrum sensitiven Kamera und einer entsprechenden Datenverarbeitungsvorrichtung von der weiteren Umgebung unterschieden und erkannt werden kann.

Gemäß einer Weiterentwicklung wird vorgeschlagen, dass wenigstens ein Längsstreifen der Markierung zwischen den Kantenmarkierungen angeordnet ist. Der wenigstens eine Längsstreifen zwischen der Kantenmarkierung kann zudem vorzugsweise in einfacher Weise asymmetrisch zur Längsachse des Sicherheitsgurts angeordnet sein, so dass sich jeweils unterschiedliche Abstände des Längsstreifens zur Kante des Sicherheitsgurts, zur Kantenmarkierung und/oder den Längsstreifen der Kantenmarkierung ergeben.

Ferner wird vorgeschlagen, dass zwei Längsstreifen der Markierung zwischen der Kantenmarkierung angeordnet sind, wobei die Ausprägung dieser zwei Längsstreifen voneinander abweicht. Die Ausprägung der Längsstreifen umfasst vorzugsweise die Breite und/oder das Reflexions- und Absorptionsverhalten im infraroten Spektrum. Ferner kann ein Längsstreifen in seiner Ausprägung beispielsweise gestrichelt, punktiert oder strichpunktiert sein. Es wird in einer möglichen Weiterentwicklung vorgeschlagen, dass zwei Längsstreifen der Markierung zwischen der Kantenmarkierung angeordnet sind, wobei diese zwei Längsstreifen gestrichelt sind. Die Längsstreifen zwischen der Kantenmarkierung können in diesem Fall beispielsweise als in Reihe angeordnete Rechtecke angesehen werden. Derartige Längsstreifen zwischen der Kantenmarkierung können bei einem verdrehten Sitz eine verbesserte Detektierbarkeit ermöglichen.

Gemäß einer Weiterentwicklung wird vorgeschlagen, dass die Markierung vorzugsweise Querstegmarkierungen aufweist, welche die Kantenmarkierungen beider Kanten des Sicherheitsgurtes miteinander verbinden. Hierdurch kann ein breites Muster mit unterbrochenen Strukturen auf dem Sicherheitsgurt gebildet werden, wodurch die Detektierbarkeit des Verlaufs des Gurtes weiter erhöht werden kann. Die Markierung spart in diesem Fall vorzugsweise Rechtecke aus, insbesondere bei einer Kantenmarkierung beider Kanten durch Längsstreifen, welche jeweils oben und unten von einer Querstegmarkierung begrenzt werden. Weiterhin werden bei einem weiteren Längsstreifen zwischen den Kantenmarkierungen vorzugsweise zwei nebeneinander angeordnete Rechtecke durch die Markierung ausgespart. Es werden beispielsweise bei zwei Längsstreifen zwischen der Kantenmarkierung vorzugsweise drei nebeneinander angeordnete Rechtecke von der Markierung ausgespart. Die Rechtecke weisen vorzugsweise keine erkennbare Mittelline senkrecht parallel zur Längsachse auf. Die Markierung kann grundsätzlich ein geringeres oder ein erhöhtes Absorptionsvermögen im infraroten Spektralbereich im Vergleich zu den von der Markierung ausgesparten Bereichen aufweisen. Eine verbesserte Detektierbarkeit kann insbesondere bei einem verdrehten Sitz erreicht werden, da schmale Kantenmarkierungen in diesem Fall eine verringerte Detektierbarkeit aufweisen können.

Gemäß einer Weiterentwicklung wird vorgeschlagen, dass der Sicherheitsgurt aus wenigstens zwei verschiedenen Garnen mit jeweils unterschiedlichen optischen Eigenschaften im infraroten Spektralbereich hergestellt ist. Die optischen Eigenschaften im infraroten Spektralbereich betreffen insbesondere das Reflexions- und Absorptionsverhalten.

Ein Sicherheitsgurt mit einer entsprechenden Markierung kann beispielsweise mit den Webarten Twill, Plain, Satin, Double oder Hollow Weave hergestellt werden. Es können beispielsweise Garne mit 550 dtex bis 1100 dtex als Schussfaden und 1100 dtex bis 2200 dtex als Kettfaden verwendet werden.

Ein entsprechendes Garn mit optisch im Infrarotspektrum abweichenden Eigenschaften kann beispielsweise durch Zugabe eines die Eigenschaften im Infrarotspektrum beeinflussenden Stoffs vor der Herstellung des Garns aus einer Schmelze erreicht werden. Ein entsprechendes Additiv kann beispielsweise einem Polyestergranulat vor der Schmelze und der Herstellung von Polyesterfasern zugegeben werden. Daher weist das Garn bereits die entsprechenden optischen Eigenschaften auf, welche zudem über das gesamte Volumen vorliegen, so dass Erosion der Oberfläche, beispielsweise durch jahrelangen Gebrauch, keine maßgebliche Veränderung der optischen Eigenschaften bewirkt.

In alternativen Ausführungsformen kann die Markierung auf dem Sicherheitsgurt beispielsweise durch Beschichtung eines Garns vor der Herstellung des Sicherheitsgurts erreicht werden. Weiterhin kann die Markierung in alternativen Ausführungsformen durch Aufdrucken oder Beschichten des Sicherheitsgurtes erfolgen.

Weiterhin wird zur Lösung der Aufgabe der Erfindung ein Detektionssystem für das Detektieren eines Benutzungszustands mindestens eines Sicherheitsgurts nach einem der Ansprüche 1 bis 9 in einem Kraftfahrzeug vorgeschlagen, welches mindestens eine Kamera, welche zur Bildaufnahme im infraroten Spektralbereich eingerichtet ist, wobei die Kamera zur Bildaufnahme des mindestens einen Sicherheitsgurts eingerichtet ist, und eine elektronische Datenverarbeitungseinrichtung umfasst. Die Datenverarbeitungseinrichtung ist dazu eingerichtet, den Sicherheitsgurt und den Benutzungszustand des Sicherheitsgurts durch einen Insassen zu erkennen.

In vorteilhaften Ausführungsformen kann das Detektionssystem den Benutzungszustand eines Sicherheitsgurts bzw. den Anschnallzustand auf mehreren Sitzen in einem Fahrzeug erfassen.

Gemäß einer Weiterentwicklung wird vorgeschlagen, dass die Datenverarbeitungseinrichtung dazu eingerichtet ist, die asymmetrische Markierung zur Längsachse des Sicherheitsgurts und die Kantenmarkierung zu erkennen.

Es wird ferner vorgeschlagen, dass die Datenverarbeitungseinrichtung dazu eingerichtet ist, die Sitzposition und/oder die Größe eines Insassen aus der Detektion des Sicherheitsgurts zu ermitteln.

Die Erfindung wird im Folgenden anhand bevorzugter Ausführungsformen unter Bezugnahme auf die beigefügten Figuren erläutert. Dabei zeigt:
- Fig. 1: einen Abschnitt eines Sicherheitsgurts mit Markierung;
- Fig. 2: ein Detektionssystem mit einer Kamera, Datenverarbeitungseinrichtung und einem Sicherheitsgurt;
- Fig. 3: einen weiteren Abschnitt eines Sicherheitsgurts mit zwei gestrichelten Längsstreifen in der Mitte; und
- Fig. 4: einen weiteren Abschnitt eines Sicherheitsgurts mit einem Längsstreifen in der Mitte und Querstegmarkierungen.

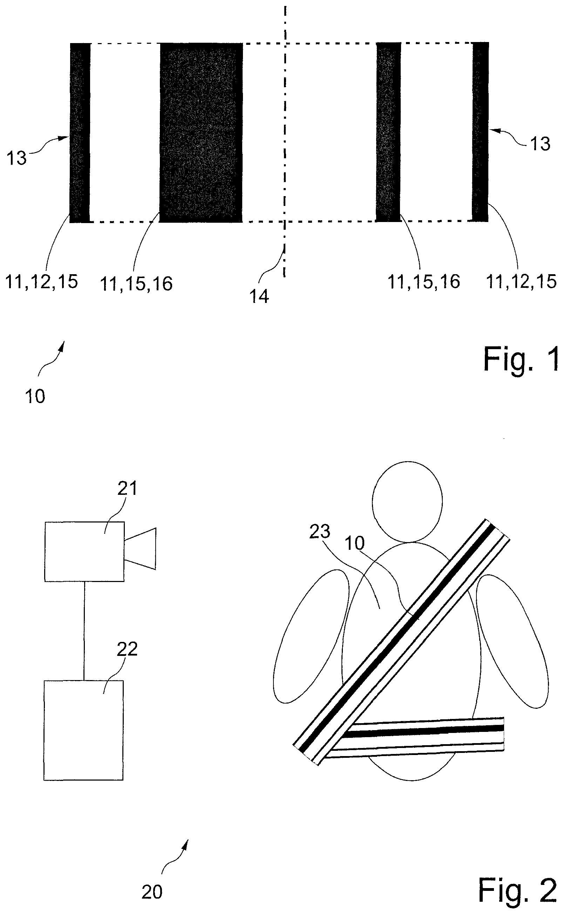

In Figur 1 ist ein schematisches Ausführungsbeispiel eines Abschnitts eines Sicherheitsgurts 10 für ein Kraftfahrzeug mit Markierungen 11 gezeigt. Die Darstellung der Figur 1 und auch der Figur 2 zeigt den Sicherheitsgurt 10 in einem infraroten Spektralbereich, so dass die Markierungen 11 optisch detektierbar und erkennbar sind. Im sichtbaren Spektralbereich ist die Markierung 11 dementsprechend durch das menschliche Auge vorzugsweise nicht erkennbar. Der Sicherheitsgurt 10 erstreckt sich entlang seiner Längsachse 14 und weist seitlich jeweils eine Kante 13 auf.

Die Kanten 13 sind durch eine Kantenmarkierung 12 in Form eines Längsstreifens 15 markiert. Beide Kantenmarkierungen 12 weisen in diesem vorteilhaften Ausführungsbeispiel die gleiche Breite auf. Zwischen den Kantenmarkierungen 12 ist eine asymmetrische Markierung 16 in Form von zwei Längsstreifen 15 vorgesehen, so dass der Sicherheitsgurt 10 insgesamt vier Längsstreifen 15 als Markierung 11 aufweist. Die beiden Längsstreifen 15 der asymmetrischen Markierung 16 weisen eine unterschiedliche Breite auf und sind jeweils auf einer Seite der Längsachse 14 auf dem Sicherheitsgurt 10 angeordnet.

In diesem Ausführungsbeispiel weist der Sicherheitsgurt 10 eine Gesamtbreite zwischen den beiden Kanten 13 von 50 mm auf, wobei die Kantenmarkierung 12 jeweils eine Breite von 3 mm aufweist. Der in der Darstellung der Figur 1 linke Längsstreifen 15 der asymmetrischen Markierung 16 weist beispielsweise eine Breite von 10 mm mit einem Abstand von 7 mm zur linken Kantenmarkierung 12 auf. Der rechte Längsstreifen 15 weist eine Breite von 5 mm auf ist mit einem Abstand von 7 mm zur rechten Kantenmarkierung 12 angeordnet.

Die Markierung 11 ist in diesem Ausführungsbeispiel dunkler als die weiteren Bereiche des Sicherheitsgurt 10 dargestellt. Die Markierung 11 weist in diesem Ausführungsbeispiel ein höheres Absorptionsvermögen im infraroten Spektralbereich auf und erscheint daher in dem Infrarotbild der Figur 1 dunkler. Es ist jedoch in alternativen Ausführungsformen möglich, dass die Markierung 11 ein geringeres Absorptionsvermögen im infraroten Spektralbereich als die weiteren unmarkierten Bereiche des Sicherheitsgurts 10 aufweist und somit heller erscheinen würde.

Die Figur 2 zeigt schematisch ein Ausführungsbeispiel eines Detektionssystems 20 für die Detektion des Anlegezustands eines Sicherheitsgurts 10. Das Detektionssystem 20 weist eine Kamera 21 zur Erfassung zumindest eines Teils eines Insassens 23 auf einem Fahrzeugsitz auf, wobei die Kamera 21 Bilder im infraroten Spektralbereich aufnimmt. Somit kann durch die Kamera 21 die im infraroten Spektralbereich detektierbare Markierung 11 des Sicherheitsgurts 10 detektiert werden.

In möglichen Ausführungsbeispielen weist das Detektionssystem 20 zusätzlich eine Infrarotlichtquelle auf, welche den Sicherheitsgurt 10 im infraroten Spektralbereich beleuchtet.

Die von der Kamera 21 erfassten Bilddaten werden von einer Datenverarbeitungseinrichtung 22 ausgewertet, wobei die Datenverarbeitungseinrichtung 22 den Sicherheitsgurt 10 und den Benutzungszustand des Sicherheitsgurts 10 durch den Insassen 23 detektiert. Wie in der schematischen Darstellung in Figur 2 dargestellt, trägt der Insasse 23 den Sicherheitsgurt 10, so dass das Detektionssystem 20 ein ordnungsgemäßes Tragen, also einen ordnungsgemäßen Benutzungszustand, des Sicherheitsgurts 10 erkennt. Dementsprechend kann beispielsweise eine optische oder akustische Gurtwarnanzeige durch die Datenverarbeitungseinrichtung 22 abgeschaltet werden.

In vorteilhaften Ausführungsformen kann die Datenverarbeitungseinrichtung 22 mittels der vorgeschlagenen Markierung 11 des Sicherheitsgurts 10 und der Bildaufnahme im IR-Spektrum neben Abweichungen von einem vorgesehenen Anschnallzustand die Sitzposition und/oder die Größe des Insassen ermitteln, was beispielsweise bei aktiven Sicherheitssystemen genutzt werden kann.

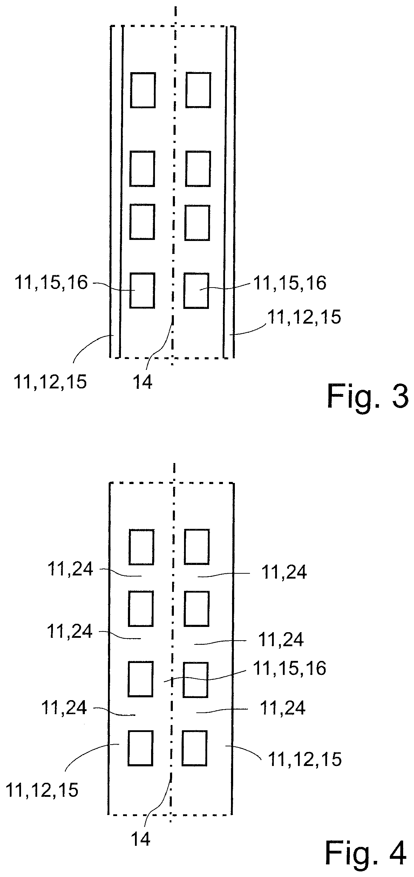

In Figur 3 ist ein weiteres Ausführungsbeispiel eines Abschnitts eines Sicherheitsgurts 10 für ein Kraftfahrzeug mit Markierungen 11 schematisch gezeigt. Zwischen den Kantenmarkierungen 12 sind zwei Längstreifen 15 als asymmetrische Markierungen 16 zwischen der Kantenmarkierung 12 vorgesehen, welche gestrichelt ausgeführt sind, so dass die Markierung 11 im mittleren Bereich des Sicherheitsgurts 10 zwei parallele Reihen Rechtecke darstellt.

Eine weitere schematisch Darstellung eines Ausführungsbeispiels zeigt Figur 4, in dem ein Längstreifen 15 als asymmetrische Markierung 16 zwischen den Kantenmarkierungen 12 angeordnet ist. Der Längsstreifen 15 zwischen den Kantenmarkierungen 12 ist mit den beiden Längsstreifen 15 der Kantenmarkierung 12 über Querstege 24 verbunden. Es lassen sich somit zwei parallel zur Längsachse 14 angeordnete Reihen aus Rechtecken erkennen. Die Markierung 11 kann insbesondere in diesem Ausführungsbeispiel im infraroten Spektralbereich dunkler erscheinen als die Bereiche außerhalb der Markierung 11, so dass die Rechtecke im infraroten Spektralbereich heller erscheinen.

## Patentansprüche

1. Sicherheitsgurt (10) für ein Kraftfahrzeug, wobei der Sicherheitsgurt (10) Markierungen (11) aufweist, welche im infraroten Spektralbereich optisch detektierbar sind, wobei
- die Markierung (11) Kantenmarkierungen (12) beider Kanten (13) des Sicherheitsgurtes (10) umfasst, **dadurch gekennzeichnet, dass**
- die Markierung (11) eine zur Längsachse (14) des Sicherheitsgurtes (10) asymmetrische Markierung (11, 16) aufweist.

2. Sicherheitsgurt (10) nach Anspruch 1, **dadurch gekennzeichnet, dass** die Kantenmarkierung (12) beider Kanten (13) durch Längsstreifen (15) gebildet ist.

3. Sicherheitsgurt (10) nach Anspruch 1 oder 2, **dadurch gekennzeichnet, dass** die beiden Längsstreifen (15) der Kantenmarkierung (12) gleich sind.

4. Sicherheitsgurt (10) nach einem der vorangehenden Ansprüche, **dadurch gekennzeichnet, dass** die Markierung (11) wenigstens drei Längsstreifen (15) aufweist.

5. Sicherheitsgurt (10) nach einem der vorangehenden Ansprüche, **dadurch gekennzeichnet, dass** wenigstens ein Längsstreifen (15) der Markierung (11) zwischen der Kantenmarkierung (12) angeordnet ist.

6. Sicherheitsgurt (10) nach einem der vorangehenden Ansprüche, **dadurch gekennzeichnet, dass** zwei Längsstreifen (15) der Markierung (11) zwischen der Kantenmarkierung (12) angeordnet sind, wobei die Ausprägung dieser zwei Längsstreifen (15) voneinander abweicht.

7. Sicherheitsgurt (10) nach einem der vorangehenden Ansprüche, **dadurch gekennzeichnet, dass** zwei Längsstreifen (15) der Markierung (11) zwischen der Kantenmarkierung (12) angeordnet sind, wobei diese zwei Längsstreifen (15) gestrichelt sind.

8. Sicherheitsgurt (10) nach einem der vorangehenden Ansprüche, **dadurch gekennzeichnet, dass** die Markierung (11) Querstegmarkierungen (24) aufweist, welche die Kantenmarkierungen (12) beider Kanten (13) des Sicherheitsgurtes (10) miteinander verbinden.

9. Sicherheitsgurt (10) nach einem der vorangehenden Ansprüche, **dadurch gekennzeichnet, dass** der Sicherheitsgurt (10) aus wenigstens zwei verschiedenen Garnen mit jeweils unterschiedlichen optischen Eigenschaften im infraroten Spektralbereich hergestellt ist.

10. Detektionssystem (20) mit einem Sicherheitsgurt (10) nach einem der vorangehenden Ansprüche für das Detektieren des Benutzungszustands des Sicherheitsgurts (10) in einem Kraftfahrzeug umfassend:
- mindestens eine Kamera (21), welche zur Bildaufnahme im infraroten Spektralbereich eingerichtet ist, wobei
- die Kamera (21) zur Bildaufnahme des mindestens einen Sicherheitsgurtes (10) eingerichtet ist, und
- eine elektronische Datenverarbeitungseinrichtung (22), **dadurch gekennzeichnet, dass**
- die Datenverarbeitungseinrichtung (22) dazu eingerichtet ist, den Sicherheitsgurt (10) und den Benutzungszustand des Sicherheitsgurts (10) durch einen Insassen (23) zu erkennen.

11. Detektionssystem (20) nach Anspruch 10, **dadurch gekennzeichnet, dass** die Datenverarbeitungseinrichtung (22) dazu eingerichtet ist, die asymmetrische Markierung (11, 16) zur Längsachse (14) des Sicherheitsgurts (10) und die Kantenmarkierung (12) zu erkennen.

12. Detektionssystem (20) nach Anspruch 10 oder 11, **dadurch gekennzeichnet, dass** die Datenverarbeitungseinrichtung (22) dazu eingerichtet ist, die Sitzposition und/oder die Größe eines Insassen (23) aus der Detektion des Sicherheitsgurts (10) zu ermitteln.

## Claims

1. Seat belt (10) for a motor vehicle, the seat belt (10) having markings (11) which are optically detectable in the infrared spectral range,
- the marking (11) comprising edge markings (12) of both edges (13) of the seat belt (10), **characterized in that**
- the marking (11) has a marking (11,16) which is asymmetrical with respect to the longitudinal axis (14) of the seat belt (10).

2. Seat belt (10) according to claim 1, **characterized in that** the edge marking (12) of both edges (13) is formed by longitudinal stripes (15).

3. Seat belt (10) according to either claim 1 or claim 2, **characterized in that** the two longitudinal stripes (15) of the edge marking (12) are identical.

4. Seat belt (10) according to any of the preceding claims,
**characterized in that** the marking (11) has at least three longitudinal stripes (15).

5. Seat belt (10) according to any of the preceding claims,
**characterized in that** at least one longitudinal stripe (15) of the marking (11) is arranged between the edge marking (12).

6. Seat belt (10) according to any of the preceding claims,
**characterized in that** two longitudinal stripes (15) of the marking (11) are arranged between the edge marking (12), the shape of these two longitudinal stripes (15) differing from one another.

7. Seat belt (10) according to any of the preceding claims,
**characterized in that** two longitudinal stripes (15) of the marking (11) are arranged between the edge marking (12), these two longitudinal stripes (15) being dashed.

8. Seat belt (10) according to any of the preceding claims,
**characterized in that** the marking (11) has transverse bar markings (24) which connect the edge markings (12) of both edges (13) of the seat belt (10) to one another.

9. Seat belt (10) according to any of the preceding claims,
**characterized in that** the seat belt (10) is produced from at least two different yarns, each having different optical properties in the infrared spectral range.

10. Detection system (20) having a seat belt (10) according to any of the preceding claims for detecting the state of use of the seat belt (10) in a motor vehicle, comprising:
- at least one camera (21) which is designed to record images in the infrared spectral range,
- the camera (21) being designed to record images of the at least one seat belt (10), and
- an electronic data processing device (22), **characterized in that**
- the data processing device (22) is designed to detect the seat belt (10) and the state of use of the seat belt (10) by an occupant (23).

11. Detection system (20) according to claim 10, **characterized in that** the data processing device (22) is designed to detect the marking (11, 16) that is asymmetrical with respect to the longitudinal axis (14) of the seat belt (10), and the edge marking (12).

12. Detection system (20) according to claim 10 or claim 11,
**characterized in that** the data processing device (22) is designed to determine the seat position and/or the size of an occupant (23) from the detection of the seat belt (10).

## Revendications

1. Ceinture de sécurité (10) pour un véhicule automobile, dans laquelle la ceinture de sécurité (10) présente des marquages (11) qui sont détectables optiquement dans le domaine spectral infrarouge, dans laquelle
- le marquage (11) comprend des marquages de bord (12) des deux bords (13) de la ceinture de sécurité (10), **caractérisée en ce que**
- le marquage (11) présente un marquage asymétrique (11, 16) par rapport à l'axe longitudinal (14) de la ceinture de sécurité (10).

2. Ceinture de sécurité (10) selon la revendication 1, **caractérisée en ce que** le marquage de bord (12) des deux bords (13) est formé par des bandes longitudinales (15).

3. Ceinture de sécurité (10) selon la revendication 1 ou 2,
**caractérisée en ce que** les deux bandes longitudinales (15) du marquage de bord (12) sont identiques.

4. Ceinture de sécurité (10) selon l'une des revendications précédentes, **caractérisée en ce que** le marquage (11) présente au moins trois bandes longitudinales (15).

5. Ceinture de sécurité (10) selon l'une des revendications précédentes, **caractérisée en ce qu'au** moins une bande longitudinale (15) du marquage (11) est disposée entre le marquage de bord (12).

6. Ceinture de sécurité (10) selon l'une des revendications précédentes, **caractérisée en ce que** deux bandes longitudinales (15) du marquage (11) sont disposées entre le marquage de bord (12), dans laquelle le relief desdites deux bandes longitudinales (15) est différent.

7. Ceinture de sécurité (10) selon l'une des revendications précédentes, **caractérisée en ce que** deux bandes longitudinales (15) du marquage (11) sont disposées entre le marquage de bord (12), dans laquelle lesdites deux bandes longitudinales (15) sont hachurées.

8. Ceinture de sécurité (10) selon l'une des revendications précédentes, **caractérisée en ce que** le marquage (11) présente des marquages transversaux (24) qui relient entre eux les marquages de bord (12) des deux bords (13) de la ceinture de sécurité (10).

9. Ceinture de sécurité (10) selon l'une des revendications précédentes, **caractérisée en ce que** la ceinture de sécurité (10) est fabriquée à partir d'au moins deux fils différents comportant respectivement des propriétés optiques différentes dans le domaine spectral infrarouge.

10. Système de détection (20) comportant une ceinture de sécurité (10) selon l'une des revendications précédentes pour la détection de l'état d'utilisation de la ceinture de sécurité (10) dans un véhicule automobile, comprenant :
- au moins une caméra (21) configurée pour la prise de vue dans le domaine spectral infrarouge, dans lequel
- la caméra (21) est configurée pour la prise de vue de l'au moins une ceinture de sécurité (10), et
- un dispositif de traitement de données (22) électronique,
**caractérisé en ce que**
- le dispositif de traitement de données (22) est configuré pour reconnaître la ceinture de sécurité (10) et l'état d'utilisation de la ceinture de sécurité (10) par un passager (23).

11. Système de détection (20) selon la revendication 10,
**caractérisé en ce que** le dispositif de traitement de données (22) est configuré pour reconnaître le marquage asymétrique (11, 16) par rapport à l'axe longitudinal (14) de la ceinture de sécurité (10) et le marquage de bord (12).

12. Système de détection (20) selon la revendication 10 ou 11,
**caractérisé en ce que** le dispositif de traitement de données (22) est configuré pour déterminer la position assise et/ou la taille d'un passager (23) à partir de la détection de la ceinture de sécurité (10).
